# FASCICULE DE BREVET EUROPEEN

(11) **EP 0 474 541 B1**
(45) Date de publication et mention de la délivrance du brevet: **09.06.1999**
(21) Numéro de dépôt: 91402322.1
(22) Date de dépôt: 28.08.1991
(51) Int. Cl.: G06F 1/10, G06F 1/08

(54) **Procédé et dispositif de réglage des signaux d'horloge dans un système synchrone**
Verfahren und Vorrichtung zur Taktsignalregelung in einem Synchronsystem
Method and apparatus for adjusting clock signals in a synchronous system

(30) Priorité: 30.08.1990 FR 9010805
(43) Date de publication de la demande: 11.03.1992
(73) Titulaire: BULL S.A., 78430 Louveciennes (FR)
(72) Inventeur: Boudry, Jean-Marie, F-75116 Paris Cédex (FR); Brinkhuysen, Jacques, F-75116 Paris Cédex (FR)
(74) Mandataire: Colombe, Michel

(56) Documents cités:
- EP-A- 0 294 505
- EP-A- 0 366 326
- NL-A- 8 802 532

## Description

L'invention s'applique aux systèmes synchrones, comme par exemple le sous-système central d'un système informatique. Ces systèmes sont composés d'une pluralité d'unités fonctionnelles, généralement sous la forme de circuits intégrés répartis sur des cartes électroniques et toutes ces unités (cartes et/ou circuits intégrés) fonctionnent en synchronisme sous le contrôle de signaux d'horloge fournis à partir d'une horloge de base commune.

En comparaison avec les systèmes asynchrones, les systèmes synchrones présentent l'avantage de la rapidité car les échanges de signaux d'information entre les unités se font directement, sans passer par l'intermédiaire de circuits de resynchronisation qui introduisent toujours des retards. Un autre avantage est la possibilité de geler le système dans un état logique déterminé en arrêtant l'émission des signaux d'horloge. Les systèmes synchrones simplifient également certaines opérations de maintenance, par exemple pour abaisser la fréquence lors des remplacements de cartes électroniques défectueuses comme cela a été décrit dans la demande de brevet français n° 2 640 403 publiée le 15 juin 1990 et ayant pour titre "Système électronique à plusieurs unités amovibles".

Les systèmes synchrones ont par contre l'inconvénient d'être de mise en oeuvre délicate, en particulier lorsque le nombre d'unités synchrones est important. Il est en effet difficile d'obtenir un fonctionnement parfaitement synchrone de toutes les unités tout en ayant une fréquence de fonctionnement élevée. Les liaisons entre unités et les dispersions de fabrication de ces unités introduisent des écarts de synchronisation parasites qui obligent à réduire la fréquence de fonctionnement. Ces déphasages parasites sont à la fois statiques ("skew") et dynamiques ("jitter").

Pour remédier à cet inconvénient, on cherche tout d'abord à supprimer les causes de déphasage dues aux liaisons en prévoyant une disposition aussi régulière que possible des unités dans le système. Cette solution ne permet cependant pas de compenser les dispersions de fabrication qui peuvent être très importantes surtout si les circuits intégrés proviennent de fabricants différents.

On est donc amené à prévoir des circuits de correction agissant sur les caractéristiques des signaux émis. Bien entendu, pour résoudre le problème de synchronisation, ce sont les signaux d'horloge qu'il convient de corriger en priorité. En général, les signaux d'horloge sont engendrés par des générateurs d'horloge à partir d'un signal d'horloge de base fourni par exemple par un oscillateur à quartz. La correction pourra donc être effectuée au niveau de ces générateurs en agissant sur la phase des signaux émis et surtout sur leur amplitude (en tension ou courant) en réglant les caractéristiques des amplificateurs de sortie des générateurs.

Pour déterminer les corrections optimales à appliquer, la solution la plus sûre consiste à faire fonctionner chaque système sur un banc de test et à rechercher la correction qui procure la coïncidence en amplitude et phase entre les signaux réellement obtenus et des signaux de référence. Ces signaux de référence définissent des caractéristiques imposées par les spécifications du système qu'on veut réaliser. D'autre part, afin de se prémunir au mieux des problèmes liés aux dispersions de fabrication, il est préférable de choisir une méthode de réglage numérique selon laquelle les réglages à apporter sont définis par un nombre binaire définissant la valeur des réglage. Pour effectuer la correction en fonction de la valeur de réglage, on utilise alors des circuits à retard et des amplificateurs réglables de façon discrète.

Une fois que la valeur des paramètres de réglage est déterminée grâce au banc de test, il convient de les conserver en vue d'être utilisés en fonctionnement normal après l'initialisation du système. Généralement, les systèmes d'une certaine importance comportent des dispositifs de maintenance constitués essentiellement d'un processeur de service, d'unités spécifiques de maintenance et de circuits de maintenance intégrés dans les unités fonctionnelles. Ces éléments sont reliés entre eux par un ensemble de liaisons qu'on appelle canal de maintenance. Le démarrage du système s'effectue alors sous la commande du processeur de service qui déclenche l'initialisation des paramètres technologiques du système et en particulier des paramètres de réglage qui commandent les différents moyens de réglage prévus dans les générateurs d'horloge. Pour cela, on pourrait utiliser une mémoire non volatile appartenant au processeur de service (disquette ou autre mémoire auxiliaire) dans laquelle seraient emmagasinés les paramètres de réglage. Or, cette solution présente l'inconvénient qu'un remplacement de certains circuits du système peut conduire à modifier les données contenues en mémoire. Ceci est particulièrement le cas si on a prévu un générateur d'horloge par carte, alors que ces cartes sont susceptibles d'être remplacées. Aussi, l'invention a pour but de proposer une solution pour remédier aux inconvénients précités.

Plus précisément, l'invention a pour objet un procédé de réglage des signaux d'horloge dans un système synchrone du type comportant plusieurs unités synchronisées par lesdits signaux d'horloge fournis à partir d'un signal d'horloge de base, par au moins un générateur comportant des moyens de réglage desdits signaux d'horloge, lesdits moyens de réglage étant commandés par des paramètres de réglage numériques, ledit procédé comprenant les étapes suivantes :
1° avant le démarrage du système : détermination de la valeur optimale des paramètres de réglage qui confère aux signaux d'horloge des caractéristiques de référence et chargement desdites valeurs optimales dans une mémoire non volatile associée audit générateur,
2° à chaque démarrage du système : lecture de ladite mémoire et commande desdits moyens de réglage par la valeur lue dans ladite mémoire.

Plusieurs solutions peuvent être envisagées pour effectuer la lecture de la mémoire. On pourrait par exemple utiliser une interface de lecture du processeur de service en prévoyant les liaisons et les circuits appropriés. Cependant, cette méthode ne permet pas de vérifier immédiatement si le réglage est réellement correct. Il se peut en effet que des erreurs soient introduites soit au moment de l'écriture de la mémoire, soit lors de sa lecture. Si tel est le cas, le système risque de fonctionner de façon incorrecte et entraîner des préjudices importants à l'exploitation du système.

Il convient d'autre part de remarquer que les moyens de maintenance généralement prévus dans un tel système possèdent des circuits synchrones, synchronisés par l'horloge du système pour effectuer certaines interventions au niveau des unités fonctionnelles en cours de fonctionnement. Ces circuits synchrones possèdent généralement des circuits de lecture et d'écriture ainsi que des automates permettant par exemple d'effectuer des dialogues dynamiques avec les unités. Aussi, selon un autre but de l'invention, on cherche à utiliser ces circuits synchrones pour effectuer la lecture de la mémoire non volatile tout en tenant compte du fait que tant que la mémoire n'a pas été lue correctement, ces circuits synchrones ne reçoivent pas les bons signaux d'horloge.

Dans ce but, le procédé selon l'invention est réalisé de sorte à ce que la lecture de ladite mémoire est effectuée par un circuit de lecture synchronisé par lesdits signaux d'horloge, à ce que la lecture de ladite mémoire est accompagnée d'une détection de l'existence d'erreurs de lecture, à ce que, en l'absence d'erreur, lesdits moyens de réglage sont commandés directement par la valeur lue dans ladite mémoire, à ce que, en cas d'erreur, lesdits moyens de réglage sont commandés par une valeur modifiée desdits paramètres de réglage et à ce que la première lecture de ladite mémoire est précédée d'une étape consistant à commander lesdits moyens de réglage par une valeur approchée des paramètres de réglage.

La détection des erreurs de lecture peut se faire de diverses façons. On pourrait par exemple utiliser une méthode de criptage ou ajouter aux paramètres de réglage un mot binaire d'un profil particulier dont la non détection lors de la lecture indiquerait une erreur de lecture. Une autre solution consiste à utiliser un code détecteur d'erreur associé à la donnée en mémoire et à calculer le syndrome d'erreur après chaque lecture. Il faut ensuite effectuer une modification des paramètres de réglage. Si l'erreur de lecture n'est due qu'au réglage initial imparfait, le choix de la valeur modifiée de ces paramètres peut alors se faire par les essais successifs suivants : valeur correspondant à la technologie la plus probable, puis correspondant à un cas intermédiaire entre la technologie la plus probable et la plus mauvaise technologie, puis correspondant à un cas intermédiaire entre la technologie la plus probable et la meilleure technologie, puis au cas correspondant à la meilleure technologie, puis au cas correspondant à la plus mauvaise technologie. Bien entendu, les essais précédents sont arrêtés lorsque la lecture de la mémoire est effectuée sans erreur.

Pour assurer une meilleure sécurité dans la détection des erreurs de lecture, le procédé selon une forme de réalisation de l'invention est en outre caractérisé en ce que lesdits paramètres étant sous forme numérique binaire, lesdites valeurs optimales sont associées à un code de détection d'erreurs qui est également chargé dans ladite mémoire et en ce que après lecture de la mémoire, une opération de détection d'erreur est effectuée au moyen dudit code de détection d'erreur.

D'autre part, pour converger le plus rapidement possible vers une lecture correcte de la mémoire, le procédé selon une forme de réalisation de l'invention est en outre caractérisé en ce que ledit code est un code correcteur d'erreurs permettant au moins de corriger une erreur simple et en ce que, en cas de détection d'une erreur simple, ladite valeur modifiée est la valeur lue et corrigée grâce audit code.

D'autres aspects du procédé selon l'invention apparaîtront dans la suite de la description.

L'invention concerne également un système synchrone permettant la mise en oeuvre du procédé présenté précédemment.

D'autres aspects et détails de réalisation du système selon l'invention seront également exposés dans la description qui va suivre.
- La figure 1 représente un système synchrone selon l'invention.
- La figure 2 représente un générateur d'horloge muni de moyens de réglage permettant la mise en oeuvre de l'invention.
- La figure 3 représente différents signaux d'horloge susceptibles de subir les réglages conformément à l'invention.
- La figure 4 représente les circuits de génération et de réglage des signaux d'horloge d'un générateur d'horloge primaire.
- La figure 5 représente un circuit de génération et de réglage des signaux d'horloge d'un générateur d'horloge secondaire.
- La figure 6 représente un amplificateur de sortie réglable.
- La figure 7 représente un détail de réalisation de l'amplificateur de la figure 6.
- La figure 8 représente un des circuits constitutifs d'un circuit à retard réglable.

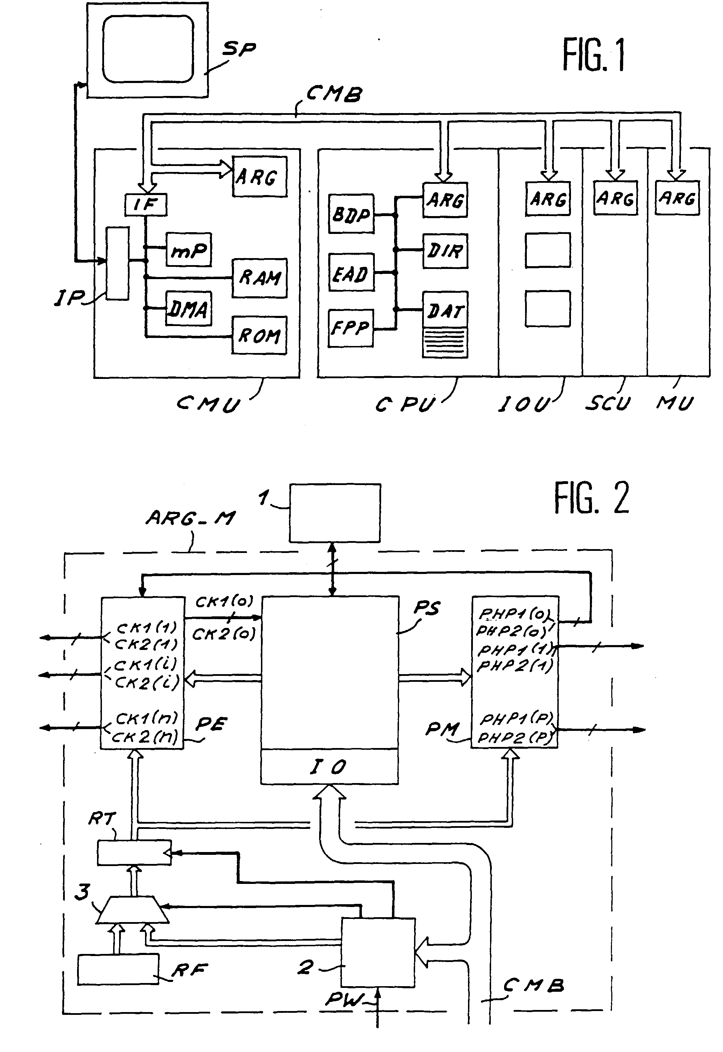

La figure 1 représente de façon schématique et à titre d'exemple d'application le sous-système central d'un système informatique composé d'une ou plusieurs cartes processeur CPU, d'une ou plusieurs cartes d'entrée-sortie IOU, d'un contrôleur de mémoire SCU, de cartes mémoire MU et d'une carte de maintenance CMU. Ces unités sont associées à un processeur de service SP relié à la carte de maintenance CMU, elle-même reliée aux autres unités par l'intermédiaire d'un bus de maintenance CMB.

Chaque carte, par exemple une des cartes processeur CPU, comporte plusieurs unités fonctionnelles BDP, EAD, FPP, DIR, DAT pouvant être réalisée chacune sous la forme d'un circuit intégré. Toutes les unités de toutes les cartes ont un fonctionnement synchrone et communiquent entre elles par des liaisons fonctionnelles appropriées (bus par exemple) non représentées. Les unités fonctionnelles de chaque carte sont synchronisées par un générateur de signaux d'horloge ARG monté sur la carte et dont le fonctionnement est commandé par le processeur de service par l'intermédiaire du bus CMB.

Selon une particularité du mode de réalisation décrit, la carte de maintenance CMU possède un générateur d'horloge primaire ou maître (ci-après désigné ARG-M) qui fournit aux générateurs d'horloge secondaires ou esclaves des autres cartes des signaux d'horloge maître par l'intermédiaire de liaisons spécifiques non représentées.

La carte CMU comporte un système à microprocesseur mP associé à une mémoire vive RAM, une mémoire morte ROM, une unité d'accès direct à la mémoire DMA et des circuits d'interface (IP, IF) avec respectivement le processeur de service SP et le bus CMB.

Le bus CMB est un bus microprocesseur de type classique comportant des lignes de données, d'adresse et de contrôle dont la description détaillée est superflue car bien connue dans la technique des microprocesseurs. Ce bus est relié aux unités fonctionnelles ainsi qu'aux générateurs d'horloge des cartes de façon à contrôler les opérations de maintenance au niveau du système et en particulier à commander l'initialisation et le réglage des signaux d'horloge.

Le système d'horloge fonctionne globalement de la façon suivante. A l'initiative du processeur de service SP, le microprocesseur mP exécute un microprogramme spécifique ayant notamment pour résultat de placer sur le bus CMB, par l'intermédiaire de l'interface IF, des signaux de commande à destination des divers générateurs d'horloge ARG. Le fonctionnement détaillé au niveau de chaque générateur d'horloge sera expliqué en référence à la figure 2.

La figure 2 représente le générateur d'horloge ARG-M ainsi qu'une mémoire non volatile 1 de la carte de maintenance CMU. Les circuits du générateur ARG-M peuvent être subdivisés en trois parties principales : une partie maître PM, une partie esclave PE et une partie synchrone PS. La partie maître PM qui comporte un oscillateur à quartz (non représenté) fournit des signaux d'horloge maître PHP1, PHP2 destinés aux différentes cartes du système numérotées 0, 1,...,p, la carte CMU portant le numéro zéro. Les générateurs d'horloge des autres unités comportent également une partie synchrone et une partie esclave recevant les signaux d'horloge maître qui leurs sont destinés. A partir des signaux d'horloge maître PHP1, PHP2, chaque générateur d'horloge engendre par l'intermédiaire de sa partie esclave des signaux d'horloge secondaires ou esclaves CK1, CK2 destinés aux divers circuits intégrés de la carte. Par exemple, les signaux PHP1(0), PHP2(0) sont envoyés à la partie esclave PE du générateur ARG-M de la carte CMU. A partir de ces signaux, PE fournit les signaux d'horloge esclaves CK1(0), CK2(0),..., CK1(i), CK2(i),..., CK1(n), CK2(n) destinés respectivement aux circuits intégrés numérotés 0, ..., i, ..., n de la carte considérée. En particulier, les signaux CK1(0), CK2(0) sont transmis à la partie synchrone PS du générateur.

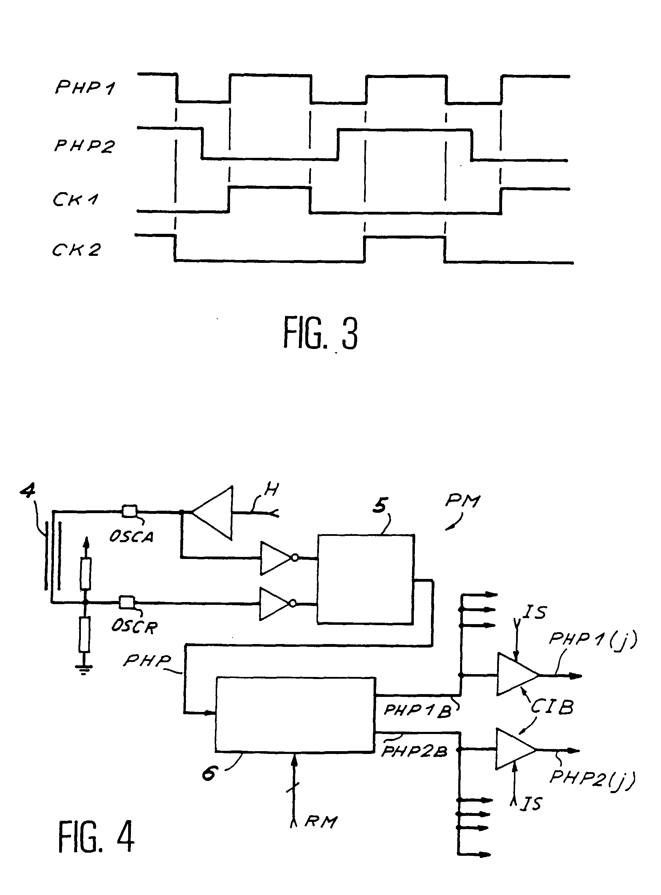

Les parties PM et PE feront l'objet d'une description détaillée en références aux figures 4 à 8.

L'allure des signaux PHP1, PHP2, CK1, CK2 est représentée à la figure 3. Le signal PHP1 a une fréquence double de chacun des signaux CK1 et CK2 tandis que le signal PHP2 est un signal de discrimination de ces deux phases. Cet exemple donné à titre purement illustratif se situe dans un contexte d'un fonctionnement en deux phases CK1, CK2, l'horloge maître représentée ayant été choisie pour augmenter la tolérance en phase des signaux PHP1 et PHP2 compte tenu des perturbations dues aux liaisons entre le générateur d'horloge maître et les générateurs d'horloge esclaves des différentes cartes.

Le bus de maintenance CMB est relié à la partie synchrone PS par l'intermédiaire de circuits d'interface IO servant notamment à la resynchronisation des signaux échangés entre le microprocesseur mP et la partie synchrone PS car le système à microprocesseur est synchronisé par une horloge indépendante de celle du système à régler.

Le générateur ARG-M comporte un registre de réglage RT dont la sortie est reliée aux entrées de réglage des parties maître et esclave PM, PE de façon à leur fournir les valeurs de réglage respectives. Le registre de réglage RT est commandé en écriture par un circuit de sélection et d'écriture 2 relié en entrée aux bus de maintenance CMB. L'entrée du registre de réglage RT est reliée à la sortie d'un multiplexeur 3 commandé par le circuit 2. Le multiplexeur 3 a une première entrée reliée à la sortie de données du circuit 2 et une seconde entrée recevant une valeur numérique RF gravée dans le substrat. La valeur RF est une valeur approchée correspondant au réglage à appliquer si les circuits des générateurs et des unités ont les caractéristiques les plus probables parmi celles pouvant être obtenues par le ou les procédés de fabrication choisis pour réaliser ces circuits. Le circuit 2 reçoit enfin un signal PW représentatif d'une mise sous tension du système.

La partie synchrone PS comporte une interface de lecture et d'écriture reliée à la mémoire non volatile 1 par une liaison appropriée. La mémoire 1 peut par exemple être réalisée au moyen d'une mémoire programmable effaçable électriquement (EEPROM). Avantageusement, cette mémoire est de type série de façon à réduire le nombre de liaisons entre cette mémoire et la partie synchrone PS.

La partie synchrone PS comporte d'autre part des circuits permettant de décoder les adresses reçues du bus CMB ainsi qu'un chemin de données comportant un ensemble de registres de commande, des bancs mémoire et des automates pour réaliser certaines opérations de maintenance dont la description exhaustive détaillée sortirait du cadre de la présente invention. Outre les circuits de lecture et d'écriture de la mémoire 1, la partie PS comporte des circuits de transfert de données entre cette mémoire et le bus CMB. Tous ces circuits sont synchronisés par les signaux d'horloge CK1(0), CK2(0).

Le circuit de sélection et d'écriture 2 comporte un circuit pour décoder les commandes et les adresses reçues du bus CMB et des circuits pour générer en fonction de ces signaux et du signal de mise sous tension PW les signaux de sélection du multiplexeur 3 et de commande d'écriture du registre de réglage RT. Le circuit 2 comporte également un circuit de transfert des données du bus CMB vers l'entrée du multiplexeur 3. Le circuit 2 est un circuit logique asynchrone dont la réalisation au moyen de portes logiques classiques peut être déduite aisément du fonctionnement qui va être décrit.

Comme nous l'avons déjà signalé, les générateurs d'horloge esclaves se distinguent de ARG-M par l'absence (ou la non utilisation) de la partie maître PM. Par conséquent, seule la partie esclave PE de ces générateurs est susceptible de subir un réglage.

Nous allons maintenant décrire le fonctionnement du générateur ARG-M du point de vue du réglage des horloges. Bien entendu, ce fonctionnement s'applique également aux générateurs esclaves sauf pour ce qui concerne la partie maître PM.

Le réglage des générateurs d'horloge du système s'effectue en deux phases : une phase préliminaire de détermination de la valeur optimale des paramètres de réglage en plaçant chaque carte du système sur un banc de test, puis une phase de réglage proprement dite à partir de ces valeurs optimales, cette deuxième phase étant exécutée à chaque mise sous tension du système après son installation. Dans tous les cas, les opérations sont initialisées par le processeur de service SP et exécutées sous le contrôle de microprogrammes correspondants du système à microprocesseurs mP.

La première phase de réglage se déroule de la façon suivante. Le microprocesseur mP commande par l'intermédiaire du bus CMB le circuit 2 de façon à ce qu'il autorise par l'intermédiaire du multiplexeur 3 le transfert des données entre le bus CMB et le registre de réglage RT. Suivant une procédure déterminée au niveau de SP, mP envoie alors une série de valeurs des paramètres de réglage qui sont chargées successivement dans le registre RT jusqu'à ce que les caractéristiques des signaux d'horloge coïncident avec des caractéristiques de référence. Lorsque la coïncidence est obtenue, la valeur optimale des paramètres de réglage est alors définie. mP calcule alors le code détecteur et correcteur d'erreur (code de Hamming par exemple) associé à cette valeur optimale. Ensuite, mP commande la partie synchrone PS pour qu'elle effectue l'écriture de la valeur optimale et de son code d'erreur dans la mémoire 1.

Lorsque toutes les mémoires des cartes du système ont été chargées comme précédemment, le système peut être installé et à chaque mise sous tension est effectuée la seconde phase de la façon suivante. Sous le contrôle de mP et du signal de mise sous tension PW, le circuit 2 effectue le transfert de la valeur approchée RF dans le registre RT. Les parties PM et PE fournissent alors des signaux d'horloge approchés PHP1, PHP2, CK1, CK2. La partie synchrone PS est alors synchronisée par les signaux d'horloge approchés CK1(0), CK2(0). Sous la commande de mP, La partie synchrone PS effectue ensuite la lecture de la mémoire 1 et la valeur lue est transmise avec son code d'erreur au microprocesseur mP. mP effectue alors une opération de détection d'erreur et si aucune erreur n'est détectée, il commande le circuit 2 pour qu'il charge cette valeur dans le registre RT. Si mP détecte une ou plusieurs erreurs corrigeables grâce au code, il effectue la correction et commande le circuit 2 pour qu'il effectue le chargement de la valeur corrigée dans le registre RT. mP commande alors une nouvelle lecture de la mémoire 1 et vérifie l'exactitude de la nouvelle valeur lue. Si la valeur moyenne RF avait été trop éloignée de la valeur optimale, la première lecture de la mémoire 1 aurait été entachée d'un nombre d'erreurs trop important pour être corrigée. Dans ce cas, mP exécute un algorithme de recherche d'une valeur initiale de réglage permettant d'aboutir à une lecture au moins corrigeable. Selon cet algorithme, mP charge le registre RT d'abord avec une valeur moyenne puis avec une valeur correspondant à un cas intermédiaire entre la technologie la plus probable et la plus mauvaise technologie, puis correspondant à un cas intermédiaire entre la technologie la plus probable et la meilleure technologie, puis au cas correspondant à la meilleure technologie, puis au cas correspondant à la plus mauvaise technologie. Normalement, l'un des essais précédents permet d'aboutir à une lecture correcte ou corrigeable de la valeur des paramètres de réglage.

Si la méthode précédente ne permettait pas d'aboutir, cela indiquerait la présence de défauts dans les circuits utilisés.

La figure 4 représente la partie maître PM du générateur ARG-M de la carte CMU. Ce circuit reçoit un signal d'horloge de base H fourni par un oscillateur à quartz. Le signal H est transmis après amplification d'une part à une première entrée d'un circuit de mise en forme 5 et d'autre part à la deuxième entrée du circuit 5 par l'intermédiaire d'une ligne à retard 4. La ligne 4 qui est associée à un pont diviseur d'adaptation est extérieure à la partie PM lorsque cette dernière est réalisée sous forme de circuit intégré. Le circuit intégré comporte alors deux bornes OSCA et OSCR pour y connecter la ligne à retard. Le circuit de mise en forme 5 peut être réalisé au moyen d'un circuit équivalent à une bascule RS qui fournit un signal PHP calibré en largeur en fonction des caractéristiques de la ligne à retard 4. La forme du signal PHP est analogue à celle du signal PHP1 représentée à la figure 3. Le signal PHP est ensuite appliqué à l'entrée d'un circuit 6 à retard variable fournissant un premier signal de sortie PHP1B identique au signal PHP et un second signal PHP2B obtenu à partir du signal PHP après traitement dans un circuit bistable suivi d'un circuit à retard commandé par les paramètres RM. Ce circuit à retard peut être simplement réalisé au moyen d'une chaine d'inverseurs mis selectivement en série en fonction de la commande RM pour obtenir le déphasage désiré entre PHP1B et PHP2B. Chaque signal PHP1B ou PHP2B est ensuite appliqué à l'entrée d'amplificateurs CIB à impédance ajustable en fonction d'une valeur de réglage IS. Chaque amplificateur CIB est affecté à une carte du système. Par exemple, deux amplificateurs fournissent les signaux PHP1(j) et PHP2(j) destinés à la carte j.

Le fonctionnement du circuit de la figure 4 se déduit aisément du schéma. On peut toutefois signaler que le montage offre la possibilité de régler chaque amplificateur CIB de façon indépendante des autres pour tenir compte des différences de caractéristiques des circuits destinataires des signaux de sortie de ces amplificateurs. En pratique, pour des raisons de simplification du réglage et surtout des opérations de test, on peut se contenter d'appliquer le même réglage IS à tous les amplificateurs. Dans ce cas, on ne corrige en fait que les dispersions de fabrication du générateur d'horloge.

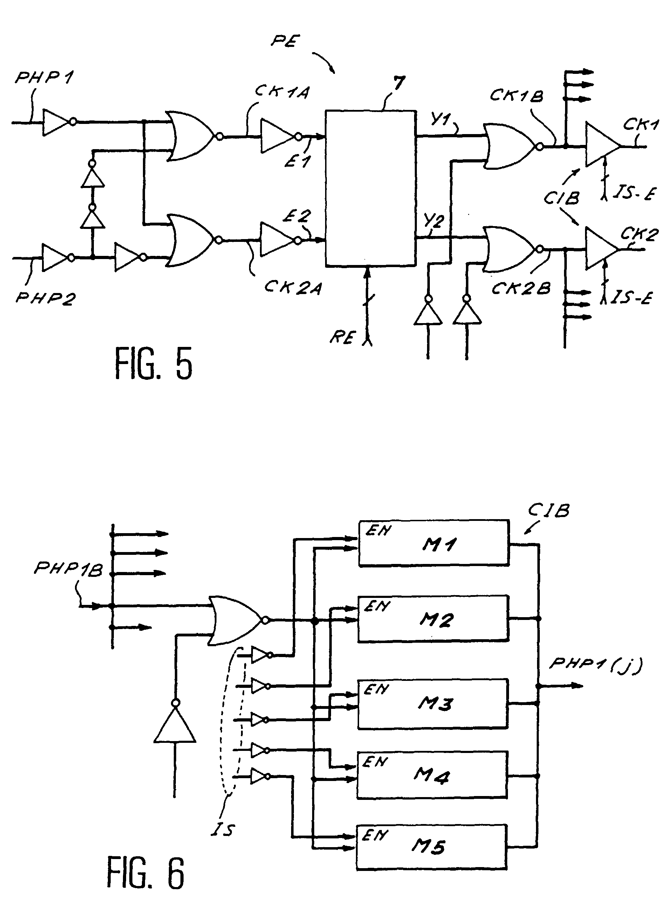

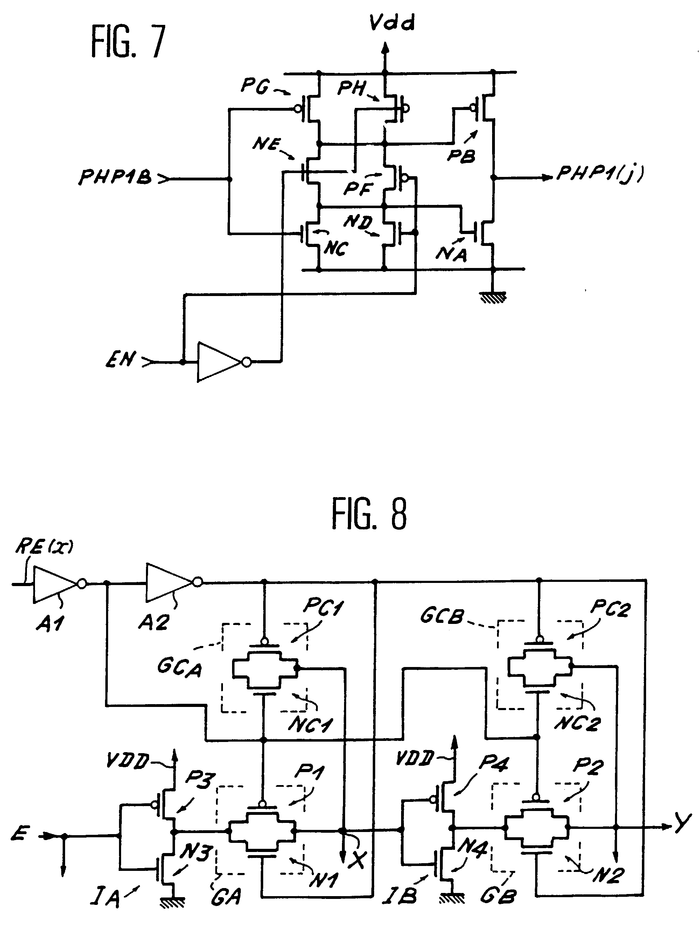

La figure 5 représente la partie esclave PE des générateurs. Ce circuit recoit les signaux PHP1, PHP2 issus d' amplificateurs correspondants du générateur maître. Ces signaux sont traités par un ensemble de circuits logiques fournissant les signaux CK1A et CK2A resultants respectivement de l'opération ET logique d'une part entre PHP1 et PHP2 et d'autre part entre PHP1 et le complément de PHP2. Les signaux CK1A et CK2B ont respectivement l'allure des signaux CK1 et CK2 de la figure 3 . Les signaux E1, E2 inverses respectivement de CK1A, CK2A sont ensuite traités par un circuit à retard variable 7 délivrant deux signaux retardés Y1, Y2 en fonction de la commande de réglage RE. La réalisation détaillée du circuit 7 sera donnée en référence à la figure 8. Les signaux Y1 et Y2 sont appliqués chacun à l'entrée d'une porte NOR de façon à fournir les signaux CK1B et CK2B identiques aux signaux Y1 et Y2 lorque les portes NOR sont validés par des signaux d'autorisation appliqués à la seconde entrée de chacune de ces portes. Les signaux CK1B et CK2B sont ensuite amplifiés par des amplificateurs CIB à impédance ajustable en fonction des paramètres de réglage IS-E pour fournir des signaux d'horloge ajustés CK1 et CK2.

La figure 6 représente le schéma de principe des amplificateurs CIB dans le cas de leur application au générateur primaire. L'amplificateur est constitué essentiellement de plusieurs modules M1, M2,...,M5 montés en parallèles et recevant chacun en entrée le signal d'horloge à régler (PHP1B dans le cas de l'exemple représenté), après éventuellement validation par l'intermédiaire d'une porte logique commandée par un signal de validation. Chaque module M1 à M5 est en fait un amplificateur à 3 états commandés par un des bits des paramètres de réglages IS et dimensionnés de façon à présenter une impédance déterminée.

Un exemple de réalisation CMOS de ces modules est représenté à la figure 7. Il est réalisé au moyen de 4 transistors à canal n: NA, ND, NC, NE et de 4 transistors à canal p: PB, PH, PG, PF. Les transistors PG et NC sont branchés en série entre la tension positive Vdd et la masse par l'intermédiaire du chemin drain-source du transistor NE et recoivent sur leur grille le signal d'entrée PHP1B. Les transistors PB et NA sont reliées en série entre Vdd et la masse et leurs grilles sont reliées respectivement au point commun d'une part à PG et NE et d'autre part à NC et NE. Enfin, les transistors PH, PF et ND sont respectivement branchés en parallèle avec les transistors PG, NE et NC. Les grilles des transistors PF et ND sont reliées entre elles et constituent l'entrée de validation EN du module. EN constitue l'entrée d'un inverseur dont la sortie est reliée aux grilles des transistors NE et PH. Le point commun à PB et NA constitue la sortie PHP1(j) de l'amplificateur.

Le circuit de la figure 7 fonctionne de la façon suivante. Lorsque EN = 1, les transistors NE et PF sont bloqués tandis que les transistors PH et ND sont passants. Il en résulte que PB et NA sont bloqués. La sortie PHP1(j) est alors à l'état de haute impédance quel que soit l'état logique de l'entrée PHP1B.

Lorsque EN = 0, PH et ND sont bloqués et NE et PF sont passants. Ainsi, PG et NC d'une part, PB et NA d'autre part constituent deux inverseurs branchés en cascade dont la sortie PHP1(j) reproduit l'entrée PHP1B.

L'impédance de sortie de chaque module est déterminée par la résistance des chemins drain-source des transistors PB et NA que l'on pourra déterminer en dimensionnant la largeur de ces transistors. En application au montage de la figure 6, on pourra par exemple dimensionner les impédances des modules M1 à M5 selon une échelle binaire. Les paramètres de réglage IS seront alors choisis de façon à valider les modules dont la mise en parallèle présente l'impédance appropriée.

Le circuit à retard variable 7 peut être réalisé conformément à la demande de brevet français numéro 2 666 183 publiée le 28 février 1992 et ayant pour titre "Circuit à constante de temps réglable et application à un circuit à retard réglable" où un circuit à constante de temps comporte plusieurs portes de transfert composées de transistors de type MOS, dont les chemins drain-source constituent des éléments résistants. La constante de temps est réglable en activant sélectivement les portes de transfert, la capacité du circuit étant la capacité de structure des transistors MOS.

Pour mémoire, nous rappelons que ce circuit est réalisé au moyen d'une pluralité de modules conformes à la figure 8 dont les points E,X et Y sont reliés respectivement entre eux, E constituant l'une des entrées E1 ou E2 alors que Y constitue l'une de ses sorties Y1 ou Y2. Chaque module selon la figure 8 est validée en fonction d'un des bits RE(x) du mot de réglage RE.

## Revendications

1. Procédé de réglage des signaux d'horloge (PHP1, PHP2, CK1, CK2) dans un système synchrone du type comportant plusieurs unités (CMU, CPU, IOU, SCU, MU, BDP, EAD, FPP, DIR, DAT) synchronisées par lesdits signaux d'horloge fournis à partir d'un signal d'horloge de base (H), par au moins un générateur (ARG) comportant des moyens de réglage (6, 7, CIB) desdits signaux d'horloge, lesdits moyens de réglage étant commandés par des paramètres de réglage numériques (IS, RM, RE), ledit procédé étant caractérisé en ce qu'il comprend les étapes suivantes :
1°) avant un démarrage du système : détermination de la valeur optimale des paramètres de réglage (IS, RM, RE) qui confère aux signaux d'horloge des caractéristiques de référence et chargement desdites valeurs optimales dans une mémoire non volatile (1) associée audit générateur (ARG),
2°) à chaque démarrage du système : lecture de ladite mémoire et commande desdits moyens de réglage par la valeur lue dans ladite mémoire, la lecture de ladite mémoire (1) étant effectuée par un circuit de lecture (PS) synchronisé par lesdits signaux d'horloge (CK1, CK2), la lecture de ladite mémoire étant accompagnée d'une détection de l'existence d'erreurs de lecture, en l'absence d'erreur, lesdits moyens de réglage étant commandés directement par la valeur lue dans ladite mémoire (1), en cas d'erreur, lesdits moyens de réglage étant commandés par une valeur modifiée desdits paramètres de réglage et la première lecture de ladite mémoire étant précédée d'une étape consistant à commander lesdits moyens de réglage par une valeur approchée des paramètres de réglage.

2. Procédé selon la revendication 1, caractérisé en ce que lesdits paramètres sont sous forme numérique binaire, lesdites valeurs optimales sont associées à un code de détection d'erreurs qui est également chargé dans ladite mémoire (1) et en ce que, après lecture de la mémoire (1), une opération de détection d'erreur est effectuée au moyen dudit code de détection d'erreur.

3. Procédé selon la revendication 2, caractérisé en ce que ledit code est un code correcteur d'erreurs permettant au moins de corriger une erreur simple et en ce que, en cas de détection d'une erreur simple, ladite valeur modifiée est la valeur lue et corrigée grâce audit code.

4. Procédé selon l'une des revendications 1 à 3, caractérisé en ce que ladite valeur approchée est celle du réglage à appliquer lorsque les circuits du générateur et des unités ont les caractéristiques les plus probables parmi celles pouvant être obtenues par le ou les procédés de fabrication choisis pour réaliser ces circuits.

5. Procédé selon l'une des revendications 1 à 4, caractérisé en ce que lesdits paramètres de réglages indiquent auxdits moyens de réglage la correction (IS) en amplitude à appliquer aux signaux d'horloge émis.

6. Procédé selon la revendication 5, caractérisé en ce que d'autres paramètres de réglage (RM, RE) indiquent auxdits moyens de réglage la correction en phase à appliquer aux signaux d'horloge émis.

7. Système synchrone comportant plusieurs unités (CMU, CPU, IOU, SCU, MU, BDP, EAD, FPP, DIR, DAT) synchronisées par des signaux d'horloge (PHP1, PHP2, CK1, CK2) à partir d'un signal d'horloge de base (H), fournis par au moins un générateur (ARG) comportant des moyens de réglage (6, 7, CIB) desdits signaux d'horloge, lesdits moyens de réglage étant commandés par des paramètres de réglage numériques (IS, RM, RE), caractérisé en ce que ledit générateur (ARG) est associé à une mémoire non volatile (1) contenant la valeur optimale des paramètres de réglage correspondant aux caractéristiques technologiques des circuits formant ledit générateur et/ou les unités qu'il synchronise, ladite valeur ayant été déterminée et chargée dans la mémoire avant un démarrage du système, et en ce que ledit système comprend des moyens de lecture (PS, mP) de ladite mémoire (1) et des moyens de transfert (CMB, 2, 3) reliés auxdits moyens de lecture pour commander les moyens de réglage en fonction de la valeur lue dans ladite mémoire à chaque démarrage du système, lesdits moyens de lecture comportant un circuit synchrone (PS), synchronisé par lesdits signaux d'horloge (CK1, CK2) et lesdits moyens de transfert permettant de commander lesdits moyens de réglage soit en fonction d'une valeur prédéterminée (RF) des paramètres de réglage avant la première lecture de ladite mémoire, soit en fonction de ladite valeur lue, lesdits paramètres de réglage (IS, RM, RE) étant associés à un code de détection et/ou de correction d'erreurs et lesdits moyens de lecture comportant des moyens (mP) pour détecter et/ou corriger les erreurs pouvant affecter les paramètres lus, de sorte à commander lesdits moyens de réglage directement par la valeur lue dans ladite mémoire (1) en absence d'erreur et à commander lesdits moyens de réglage par une valeur modifiée des dits paramètres de réglage en cas d'erreur.

8. Système synchrone selon la revendication 7, caractérisé en ce que lesdits moyens de réglage comportent des circuits de réglage et un registre de réglage (RT) pour mémoriser les paramètres de réglages, la sortie dudit registre (RT) activant lesdits circuits de réglage.

9. Système synchrone selon la revendication 8, caractérisé en ce que lesdits circuits de réglage sont des circuits de réglage d'amplitude (CIB) et/ou de réglage de phase (PM, PE) desdits signaux d'horloge.

10. Système synchrone selon la revendication 9, caractérisé en ce que lesdits moyens de lecture comportent un système à microprocesseur (mP) et des circuits d'interface (IF, IO, 2) entre ledit système à microprocesseur et d'une part, ledit circuit synchrone (PS) et d'autre part, ledit registre de réglage (RT) et en ce que ledit circuit synchrone (PS) et lesdits circuits d'interfaces sont conçus de façon à effectuer respectivement la lecture de ladite mémoire (1) et l'écriture dudit registre (RT) sous la commande du système à microprocesseur.

11. Système synchrone selon la revendication 10, caractérisé en ce qu'il comporte d'une part un générateur primaire (ARG-M) ayant une partie maître (PM) et une partie esclave (PE) et d'autre part une pluralité de générateurs secondaires (ARG-E) ayant une partie esclave (PE), en ce que la partie maître (PM) dudit générateur primaire (ARG-M) délivre aux parties esclaves (PE) des signaux d'horloge maîtres (PHP1, PHP2) à partir d'une horloge de base (H), en ce que chacune desdites parties esclaves (PE) desdits générateurs (ARG) délivre des signaux d'horloge esclaves (CK1, CK2) à partir desdits signaux d'horloge maîtres (PHP1, PHP2) et en ce que ledit système à microprocesseur (mP) est relié à chacun des moyens de réglage desdits générateurs (ARG) par une interface commune (CMB).

12. Système synchrone selon la revendication 11 caractérisé en ce que ledit générateur primaire (ARG-M) et ledit système à microprocesseur (mP) font partie d'une carte électronique de maintenance (CMU), en ce que chaque générateur secondaire (ARG-E) fait partie d'une carte du système (CPU, IOU, SCU, MU) et en ce que les circuits de chaque carte sont synchronisés par les signaux d'horloge esclaves (CK1, CK2) engendrés par le générateur secondaire associé à ladite carte.

## Patentansprüche

1. Verfahren zum Steuern von Taktsignalen (PHP1, PHP2, CK1, CK2) in einem synchronen System des Typs, der mehrere Einheiten (CMU, CPU, IOU, SCU, MU, BDP, EAD, FPP, DIR, DAT), enthält, die durch die Taktsignale synchronisiert werden, die ausgehend von einem Basistaktsignal (H) von wenigstens einem Generator (ARG) geliefert werden, der Mittel zum Steuern (6, 7, CIB) der Taktsignale enthält, wobei die Steuermittel durch digitale Steuerparameter (IS, RM, RE) gesteuert werden, wobei das Verfahren dadurch gekennzeichnet ist, daß es die folgenden Schritte enthält:
1) vor dem Start des Systems: Bestimmen des optimalen Wertes der Steuerparameter (IS, RM, RE), der den Taktsignalen in einem dem Generator (ARG) zugeordneten nichtflüchtigen Speicher (1) Referenz- und Ladeeigenschaften der optimalen Werte verleiht,
2) bei jedem Start des Systems: Lesen des Speichers und Steuern der Steuermittel durch den im Speicher gelesenen Wert, wobei das Lesen des Speichers (1) durch eine durch die Taktsignale (CK1, CK2) synchronisierte Leseschaltung (PS) ausgeführt wird, wobei das Lesen des Speichers von einer Erfassung des Vorhandenseins von Lesefehlern begleitet wird, wobei bei Abwesenheit von Fehlern die Steuermittel direkt durch den im Speicher (1) gelesenen Wert gesteuert werden und die Steuermittel im Fehlerfall durch einen modifizierten Wert der Steuerparameter gesteuert werden, wobei dem ersten Lesen des Speichers ein Schritt vorhergeht, der darin besteht, die Steuermittel durch einen an die Steuerparameter angenäherten Wert zu steuern.

2. Verfahren nach Anspruch 1, dadurch gekennzeichnet, daß die Parameter in binärer digitaler Form vorliegen, wobei den optimalen Werten ein Fehlererfassungscode zugeordnet ist, der ebenfalls in den Speicher (1) geladen ist, und daß nach dem Lesen des Speichers (1) eine Fehlererfassungsoperation mittels des Fehlererfassungscodes ausgeführt wird.

3. Verfahren nach Anspruch 2, dadurch gekennzeichnet, daß der Code ein Fehlerkorrekturcode ist, der wenigstens die Korrektur eines einfachen Fehlers ermöglicht, und daß bei einer Erfassung eines einfachen Fehlers der modifizierte Wert der gelesene und kraft dieses Codes korrigierte Wert ist.

4. Verfahren nach einem der Ansprüche 1 bis 3, dadurch gekennzeichnet, daß der angenäherte Wert jener der Steuerung ist, die anzuwenden ist, wenn die Schaltungen des Generators und der Einheiten die wahrscheinlichsten Eigenschaften unter jenen besitzen, die durch das oder die Fertigungsverfahren erhalten werden können, die für die Verwirklichung dieser Schaltungen gewählt werden.

5. Verfahren nach einem der Ansprüche 1 bis 4, dadurch gekennzeichnet, daß die Steuerparameter den Steuermitteln die auf die gesendeten Taktsignale anzuwendende Amplitudenkorrektur (IS) mitteilen.

6. Verfahren nach Anspruch 5, dadurch gekennzeichnet, daß weitere Steuerparameter (RM, RE) den Steuermitteln die auf die gesendeten Taktsignale anzuwendende Phasenkorrektur mitteilen.

7. Synchrones System, das mehrere Einheiten (CMU, CPU, IOU, SCU, MU, BDP, EAD, FPP, DIR, DAT) enthält, die durch Taktsignale (PHP1, PHP2, CK1, CK2) ausgehend von einem Basistaktsignal (H) synchronisiert sind, die von wenigstens einem Generator (ARG) geliefert werden, der Steuermittel (6, 7, CIB) für die Taktsignale enthält, wobei die Steuermittel durch digitale Steuerparameter (IS, RM, RE) gesteuert werden, dadurch gekennzeichnet, daß dem Generator (ARG) ein nichtflüchtiger Speicher (1) zugeordnet ist, der den optimalen Wert der Steuerparameter enthält, der den technologischen Eigenschaften der den Generator und/oder die von ihm synchronisierten Einheiten bildenden Schaltungen entspricht, wobei der Wert vor einem Start des Systems bestimmt und in den Speicher geladen worden ist, und daß das System Mittel (PS, mP) zum Lesen des Speichers (1) sowie Übertragungsmittel (CMB, 2, 3) enthält, die mit den Lesemitteln verbunden sind, um die Steuermittel in Abhängigkeit von dem im Speicher bei jedem Start des Systems gelesenen Wert zu steuern, wobei die Lesemittel eine synchrone Schaltung (PS), die durch die Taktsignale (CK1, CK2) synchronisiert ist, enthält und es die Übertragungsmittel ermöglichen, die Steuermittel entweder in Abhängigkeit von einem vorgegebenen Wert (RF) der Steuerparameter vor dem ersten Lesen des Speichers oder in Abhängigkeit von dem gelesenen Wert zu steuern, wobei den Steuerparametern (IS, RM, RE) ein Erfassungscode und/oder ein Fehlerkorrekturcode zugeordnet sind und die Lesemittel Mittel (mP) zum Erfassen und/oder Korrigieren der Fehler enthalten, die die gelesenen Parameter beeinflussen können, so daß die Steuermittel bei Abwesenheit eines Fehlers direkt durch den im Speicher (1) gelesenen Wert gesteuert werden und daß die Steuermittel im Fehlerfall durch einen modifizierten Wert der Steuerparameter gesteuert werden.

8. Synchrones System nach Anspruch 7, dadurch gekennzeichnet, daß die Steuermittel Steuerschaltungen und ein Steuerregister (RT) zum Speichern der Steuerparameter enthalten, wobei der Ausgang des Registers (RT) die Steuerschaltungen aktiviert.

9. Synchrones System nach Anspruch 8, dadurch gekennzeichnet, daß die Steuerschaltungen Amplitudensteuerschaltungen (CIB) und/oder Phasensteuerschaltungen (PM, PE) für die Taktsignale sind.

10. Synchrones System nach Anspruch 9, dadurch gekennzeichnet, daß die Lesemittel ein Mikroprozessorsystem (mP) und Schnittstellenschaltungen (IF, IO, 2) zwischen dem Mikroprozessorsystem und einerseits der synchronen Schaltung (PS) und andererseits dem Steuerregister (RT) enthalten, und daß die synchrone Schaltung (PS) und die Schnittstellenschaltungen so beschaffen sind, daß sie das Lesen des Speichers (1) bzw. das Schreiben in das Register (RT) unter der Steuerung des Mikroprozessorsystems ausführen.

11. Synchrones System nach Anspruch 10, dadurch gekennzeichnet, daß es einerseits einen primären Generator (ARG-M), der einen Master-Abschnitt (PM) und einen Slave-Abschnitt (PE) besitzt, und andererseits mehrere sekundäre Generatoren (ARG-E), die einen Slave-Abschnitt (PE) besitzen, enthält, daß der Master-Abschnitt (PM) des primären Generators (ARG-M) an die Slave-Abschnitte (PE) Master-Taktsignale (PHP1, PHP2) ausgehend von einem Basistakt (H) liefert, daß jeder der Slave-Abschnitte (PE) der Generatoren (ARG) Slave-Taktsignale (CK1, CK2) ausgehend von den Master-Taktsignalen (PHP1, PHP2) liefert und daß das Mikroprozessorsystem (mP) mit jedem der Steuermittel der Generatoren (ARG) über eine gemeinsame Schnittstelle (CMB) verbunden ist.

12. Synchrones System nach Anspruch 11, dadurch gekennzeichnet, daß der primäre Generator (ARG-M) und das Mikroprozessorsystem (mP) einen Teil einer elektronischen Wartungskarte (CMU) bilden, daß jeder sekundäre Generator (ARG-E) einen Teil einer Systemkarte (CPU, IOU, SCU, MU) bildet und daß die Schaltungen jeder Karte durch die Slave-Taktsignale (CK1, CK2), die von dem der Karte zugeordneten sekundären Generator erzeugt werden, synchronisiert werden.

## Claims

1. Method for adjusting clock signals (PHP1, PHP2, CK1, CK2) in a synchronous system of the type comprising several units (CMU, CPU, IOU, SCU, MU, BDP, EAD, FPP, DIR, DAT) synchronised by said clock signals supplied from a basic clock signal (H), by at least one generator (ARG) comprising means (6, 7, CIB) for adjusting said clock signals, said adjustment means being controlled by digital adjustment parameters (IS, RM, RE), said method being characterised in that it comprises the following steps:
1) before a system start-up: determination of the optimum value of the adjustment parameters (IS, RM, RE), which gives reference characteristics to the clock signals, and loading of said optimum values in a nonvolatile memory (1) associated with said generator (ARG),
2) on each system start-up: reading said memory and control of said adjustment means by the value read from said memory, the reading of said memory (1) being performed by a reading circuit (PS) synchronised by said clock signals (CK1, CK2), the reading of said memory being accompanied by detection of the existence of reading errors, in the absence of error, said adjustment means being controlled directly by the value read from said memory (1), in the event of error, said adjustment means being controlled by an amended value of said adjustment parameters and the first reading of said memory being preceded by a step consisting in controlling said adjustment means by an approximate value of the adjustment parameters.

2. Method according to Claim 1, characterised in that said parameters are in binary digital form, said optimum values are associated with an error-detection code, which is also loaded into said memory (1) and in that, after the memory (1) is read, an error-detection operation is performed by means of said error-detection code.

3. Method according to Claim 2, characterised in that said code is an error-correction code making it possible at least to correct a simple error and in that, in the event of a simple error being detected, said amended value is the value read and corrected by means of said code.

4. Method according to one of Claims 1 to 3, characterised in that said approximate value is that of the adjustment to be applied when the circuits of the generator and of the units have the most likely characteristics among those that can be obtained by the manufacturing method(s) chosen in order to produce these circuits.

5. Method according to one of Claims 1 to 4, characterised in that said adjustment parameters indicate to said adjustment means the amplitude correction (IS) to be applied to the clock signals transmitted.

6. Method according to Claim 5, characterised in that other adjustment parameters (RM, RE) indicate to said adjustment means the phase correction to be applied to the clock signals transmitted.

7. Synchronous system comprising several units (CMU, CPU, IOU, SCU, MU, BDP, EAD, FPP, DIR, DAT) synchronised by clock signals (PHP1, PHP2, CK1, CK2) from a basic clock signal (H), said signals being supplied by at least one generator (ARG) comprising means (6, 7, CIB) for adjusting said clock signals, said adjustment means being controlled by digital adjustment parameters (IS, RM, RE), characterised in that said generator (ARG) is associated with a nonvolatile memory (1) containing the optimum value of the adjustment parameters corresponding to the technological characteristics of the circuits forming said generator and/or the units that it synchronises, said value having been determined and loaded into the memory before a system start-up, and in that said system comprises means (PS, mP) for reading said memory (1) and transfer means (CMB, 2, 3) connected to said reading means in order to control the adjustment means as a function of the value read from said memory each time the system starts up, said reading means comprising a synchronous circuit (PS), synchronised by said clock signals (CK1, CK2) and said transfer means making it possible to control said adjustment means either as a function of a predetermined value (RF) of the adjustment parameters before the first reading of said memory, or as a function of said read value, said adjustment parameters (IS, RM, RE) being associated with a detection and/or error-correction code and said reading means comprising means (mP) for detecting and/or correcting any errors that might affect the parameters read, so as to control said adjustment means directly by the value read from said memory (1) in the absence of error and to control said adjustment means by an amended value of said adjustment parameters in the event of error.

8. Synchronous system according to Claim 7, characterised in that said adjustment means comprise adjustment circuits and an adjustment register (RT) for storing the adjustment parameters, the output of said register (RT) activating said adjustment circuits.

9. Synchronous system according to Claim 8, characterised in that said adjustment circuits are circuits for adjusting the amplitude (CIB) and/or for adjusting the phase (PM, PE) of said clock signals.

10. Synchronous system according to Claim 9, characterised in that said reading means comprise a microprocessor system (mP) and interface circuits (IF, IO, 2) between said microprocessor system and, on the one hand, said synchronous circuit (PS) and, on the other hand, said adjustment register (RT) and in that said synchronous circuit (PS) and said interface circuits are designed so as to perform respectively the reading of said memory (1) and the writing of said register (RT) under the control of the microprocessor system.

11. Synchronous system according to Claim 10, characterised in that it comprises, on the one hand, a primary generator (ARG-M) having a master portion (PM) and a slave portion (PE) and, on the other hand, a plurality of secondary generators (ARG-E) having a slave portion (PE), in that the master portion (PM) of said primary generator (ARG-M) supplies, to the slave portions (PE), master clock signals (PHP1, PHP2) from a basic clock (H), in that each of said slave portions (PE) of said generators (ARG) supplies slave clock signals (CK1, CK2) from said master clock signals (PHP1, PHP2) and in that said microprocessor system (mP) is connected to each of the adjustment means of said generators (ARG) by a common interface (CMB).

12. Synchronous system according to Claim 11 characterised in that said primary generator (ARG-M) and said microprocessor system (mP) form part of an electronic maintenance board (CMU), in that each secondary generator (ARG-E) forms part of a system board (CPU, IOU, SCU, MU) and in that the circuits of each board are synchronised by the slave clock signals (CK1, CK2) generated by the secondary generator associated with said board.
